# FASCICULE DE BREVET EUROPEEN

(11) **EP 1 370 171 B1**
(45) Date de publication et mention de la délivrance du brevet: **19.01.2005**
(21) Numéro de dépôt: 02716889.7
(22) Date de dépôt: 14.03.2002
(51) Int. Cl.: A47J 42/56

(54) **APPAREIL ELECTROMENAGER DE PREPARATION CULINAIRE COMPORTANT UN OUTIL ROTATIF ET UN DOUBLE DISPOSITIF DE SECURITE**
ELEKTRISCHE KÜCHENMASCHINE MIT EINEM DREHWERKZEUG UND EINER DOPPELTEN SICHERHEITSVORRICHTUNG
ELECTRIC HOUSEHOLD APPLIANCE FOR FOOD PROCESSING COMPRISING A ROTARY TOOL AND A DOUBLE SAFETY DEVICE

(30) Priorité: 22.03.2001 FR 0103876
(43) Date de publication de la demande: 17.12.2003
(73) Titulaire: SEB S.A., 69130 Ecully (FR)
(72) Inventeur: SMIT, Robert, F-65290 Louey (FR); ROUYER, Philippe, F-65380 Ossun (FR)
(74) Mandataire: Kiehl, Hubert
(86) Numéro de dépôt international: PCT/FR2002/000902
(87) Numéro de publication internationale: WO 2002/076273

(56) Documents cités:
- FR-A- 2 729 588
- FR-A- 2 756 477

## Description

La présente invention se rapporte au domaine technique général des appareils électroménagers de préparation culinaire comportant un outil rotatif.

La présente invention concerne plus particulièrement, mais non exclusivement, les mini-hachoirs comportant un outil de travail coupant tournant dans un récipient de travail, dans lesquels l'outil est entraîné par un moteur agencé dans un boîtier disposé au dessus du récipient de travail.

Notamment, les mini-hachoirs peuvent comporter un interrupteur marche/arrêt disposé dans le boîtier et commandé par le contact d'une tige de transmission avec la partie supérieure du récipient de travail. Pour mettre en marche l'appareil l'utilisateur appuie sur le boîtier ou tourne le boîtier disposé sur le récipient. En alternative ou en complément un interrupteur peut être commandé par un bouton de commande agencé sur le boîtier.

Pour faciliter le nettoyage de tels appareils il a été proposé d'intercaler une pièce d'obturation entre le récipient et le boîtier moteur, se présentant généralement sous la forme d'une coupelle. La pièce d'obturation ferme la partie supérieure du récipient et comporte une ouverture présentant un diamètre légèrement supérieur à la tige de l'outil entraînée par le moteur. Ainsi les projections d'aliments atteignent la face inférieure de la pièce d'obturation, susceptible de passer au lave-vaisselle car dépourvue de parties électriques, et non la face inférieure du boîtier moteur.

Pour éviter le fonctionnement de l'appareil sans ladite pièce d'obturation, un interrupteur actionné par ladite pièce d'obturation est prévu dans le boîtier. Toutefois une telle disposition ne permet pas d'interdire totalement le fonctionnement de l'appareil en l'absence du récipient de travail, l'utilisateur pouvant assembler le boîtier moteur et la pièce d'obturation pour mettre en marche l'appareil.

Il a été proposé dans le document WO 96/22720 de réaliser une pièce d'obturation en forme de coupelle dont le bord supérieur présente une pluralité de portions latérales déformables. Le récipient de travail fermé par la coupelle repousse lesdites portions latérales et permet l'assemblage avec le boîtier moteur. La coupelle seule ne peut pas être assemblée avec le boîtier moteur, du fait de la venue en butée desdites portions latérales contre le boîtier moteur.

Il a été proposé dans le document WO 98/24350 de réaliser un appareil comportant un récipient de travail verrouillé par une pièce d'obturation comportant une partie mobile permettant au dispositif de sécurité disposé dans le boîtier moteur supérieur de détecter la présence du récipient de travail.

L'une ou l'autre de ces réalisations permettent d'obtenir un appareil dont le fonctionnement est particulièrement sûr, puisque le dispositif de sécurité permet de détecter à la fois la présence du récipient de travail et la présence de la pièce d'obturation. Toutefois la pièce d'obturation, ou coupelle, doit faire l'objet de précautions particulières pour le nettoyage, du fait de la présence de pièces mobiles et/ou déformables. De plus, le récipient de travail comporte des moyens d'accrochage et/ou de verrouillage de la pièce d'obturation.

L'objet de la présente invention est de proposer un appareil du type précité dont le fonctionnement soit particulièrement sûr, et dont le nettoyage de la pièce d'obturation du récipient de travail soit facilité.

Un autre objet de la présente invention est de proposer un appareil du type précité dont le boîtier présente un encombrement limité et dont le fonctionnement soit particulièrement sûr.

Un autre objet de la présente invention est de proposer un appareil du type précité dont le fonctionnement soit particulièrement sûr, et dont le récipient de travail ne nécessite pas de précision dimensionnelle particulière.

Ces objets sont atteints avec un appareil électroménager de préparation culinaire comprenant un récipient de travail, une pièce d'obturation amovible du récipient de travail, un boîtier, disposé au dessus du récipient de travail, logeant un moteur prévu pour entraîner en rotation un outil disposé dans le récipient de travail, le moteur étant associé à des moyens de commande comportant un interrupteur et un premier organe de détection logés dans le boîtier ainsi qu'un deuxième organe de détection, l'interrupteur comportant une première partie mobile par rapport à une deuxième partie, le premier organe de détection étant prévu pour coopérer avec l'une des parties de l'interrupteur par l'intermédiaire d'une tige de commande ainsi qu'avec la pièce d'obturation, le deuxième organe de détection étant prévu pour coopérer avec le récipient de travail, du fait que le deuxième organe de détection est logé dans le boîtier et coopère avec ladite des parties de l'interrupteur par l'intermédiaire de ladite tige de commande.

La détection de la présence simultanée du récipient et de la pièce d'obturation empêche le fonctionnement de l'appareil tant que le récipient, la pièce d'obturation et le boîtier ne sont pas assemblés. L'absence de pièces de commande mobiles et/ou déformables dans ou sur le récipient et dans ou sur la pièce d'obturation facilite le nettoyage de ces éléments. De plus, la dissociation entre les organes de détection et l'interrupteur facilite l'implantation du dispositif de commande dans un espace restreint tel que notamment celui du boîtier moteur d'un mini-hachoir.

Avantageusement, le premier organe de détection et le deuxième organe de détection sont issus d'une bascule. Cette disposition permet de simplifier la construction des moyens de commande.

Avantageusement alors la bascule présente une articulation par rapport à la tige de commande. Une telle construction permettant de n'utiliser qu'un seul interrupteur est économique. De plus, la tige de commande permet d'éloigner l'interrupteur de la bascule, ce qui permet de limiter l'encombrement au niveau de la bascule et de mieux exploiter la place disponible dans le boîtier.

Avantageusement alors, la bascule comporte de part et d'autre de l'articulation un premier bras portant le premier organe de détection et un deuxième bras portant le deuxième organe de détection.

Avantageusement alors, le premier bras s'étend axialement vers une partie inférieure du boîtier. La direction axiale est définie en référence à l'axe de rotation des moyens d'entraînement de l'outil montés dans la partie inférieure du boîtier.

Avantageusement alors, le deuxième bras s'étend radialement vers l'extérieur du boîtier, les directions radiales étant définies perpendiculairement par rapport à l'axe de rotation précité.

Avantageusement, l'articulation pivote selon une direction perpendiculaire à la direction axiale et à une direction radiale.

Selon un mode de réalisation préféré, l'articulation comporte un axe monté dans une lumière.

Avantageusement alors, la lumière est formée par au moins une paire de crochets ayant des extrémités libres ménageant l'une par rapport à l'autre une distance légèrement inférieure au diamètre de l'axe.

Avantageusement la tige de commande est mobile entre une position basse, dans laquelle l'interrupteur est ouvert, et une position haute, dans laquelle l'interrupteur est fermé.

Avantageusement alors la tige de commande commandant l'interrupteur est mobile verticalement.

Avantageusement encore la tige de commande est mobile contre un moyen de rappel.

Avantageusement alors, la position basse de la tige de commande correspond à la position de rappel du moyen de rappel.

Avantageusement le récipient de travail comporte une partie supérieure coopérant avec la pièce d'obturation et le boîtier réalisée dans une matière présentant des tolérances géométriques supérieures à 0,5 mm.

Le récipient de travail peut notamment être réalisé en verre ou en vitrocéramique.

L'invention sera mieux comprise à l'étude d'un exemple de réalisation, pris à titre nullement limitatif, et illustré dans les figures annexées dans lesquelles :
- la figure 1 est une vue schématique en éclaté d'un mini-hachoir électrique selon l'invention, dans laquelle des parties de l'enveloppe du boîtier ont été retirées,
- la figure 2 est une vue partielle du boîtier moteur du mini-hachoir montré à la figure 1, dans laquelle une partie de l'enveloppe du boîtier a été retirée,
- la figure 3 est une vue schématique en éclaté du mini-hachoir représenté à la figure 1, dans laquelle le moteur et l'outil rotatif ne sont pas représentés,
- la figure 4 est une vue schématique en configuration assemblée du boîtier et de la pièce d'obturation du récipient montrés à la figure 3,
- la figure 5 est une vue schématique en configuration assemblée du mini-hachoir montré à la figure 3,
- la figure 6 est une vue schématique en configuration assemblée du boîtier et du récipient montrés à la figure 3.

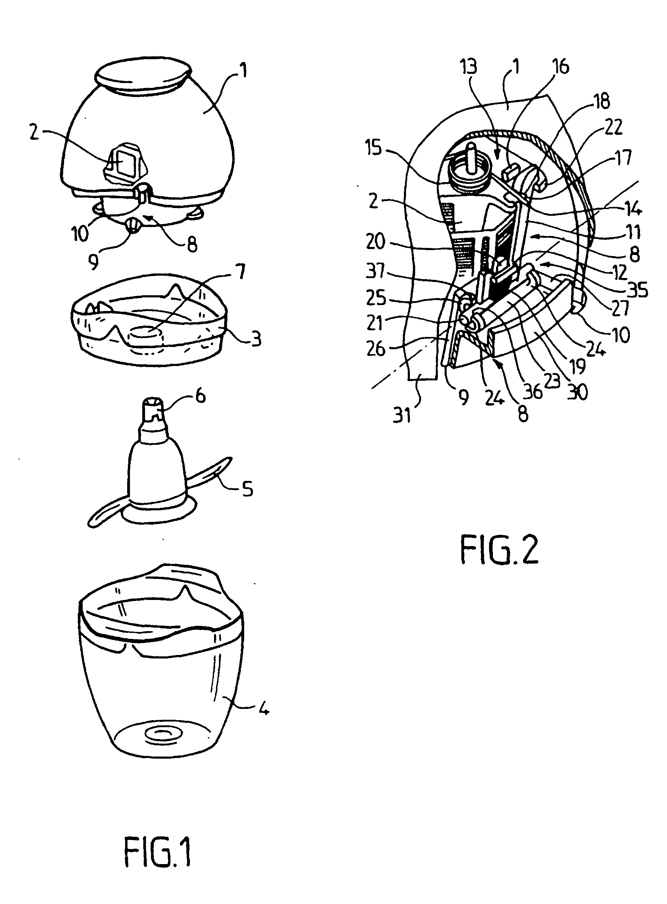

La figure 1 montre un mini-hachoir électrique comportant un boîtier de commande supérieur 1 dans lequel est disposé un moteur 2, une pièce d'obturation 3 prévue pour fermer la partie supérieure d'un récipient de travail 4 dans lequel tourne un outil rotatif 5 coupant monté sur un moyeu 6.

La pièce d'obturation 3 comporte une ouverture 7 prévue pour le passage de la partie supérieure du moyeu 6. Des moyens de commande 8 montés dans le boîtier 1 comprennent un premier organe de commande 9, prévu pour coopérer avec la pièce d'obturation 3, et un deuxième organe de commande 10, prévu pour coopérer avec le récipient de travail 4.

Tel que mieux visible à la figure 2, les moyens de commande comprennent une tige de commande 11 montée coulissante par rapport au moteur 2 dans des glissières 12, 22. La tige 11 coopère avec un interrupteur 13 solidaire du boîtier 1, à savoir un bras 14 d'un ressort 15 monté sur un tenon du boîtier et susceptible de venir en contact avec une borne métallique 16. La tige 11 comporte une encoche 17 dont la partie supérieure forme une came 18.

Lorsque la tige 11 est déplacée vers le haut, le bras 14 peut se rapprocher du fond de l'encoche 17 et atteindre la pièce 16 pour fermer l'interrupteur 13. La tige de commande 11 est maintenue dans la position abaissée représentée à la figure 2 par un moyen de rappel 19, formé par un ressort monté autour d'une languette 20 solidaire de la tige 11 et prenant appui sous la glissière 12. Un axe 21 sensiblement perpendiculaire à la tige 11 relie la languette 20 à la tige 11. L'axe 21 est perpendiculaire à la direction radiale du boîtier définie par rapport à l'axe de rotation de l'outil.

Une bascule 23 pourvue de crochets 24, 25 et portant les organes de commande 9, 10 est articulée en rotation autour de l'axe 21 avec un jeu transversal perpendiculairement par rapport à l'axe 21. La bascule 23 comporte deux paires de crochets 24, 25 légèrement décalés. L'entraxe entre les crochets 24 est supérieur à l'entraxe entre les crochets 25. La distance entre les extrémités 36, 37 des crochets de chaque paire est légèrement inférieure au diamètre de l'axe 21, afin de permettre le montage par déformation élastique des crochets. L'axe 21 et les crochets 24, 25 forment une articulation 35 entre la bascule 23 et la tige de commande 11. Ainsi la bascule 23 est suspendue à la tige de commande 11. Les paires de crochets 24, 25 forment une lumière 38 longitudinale dans laquelle l'axe 21 peut se déplacer. La bascule 23 est montée flottante par rapport à la tige 11.

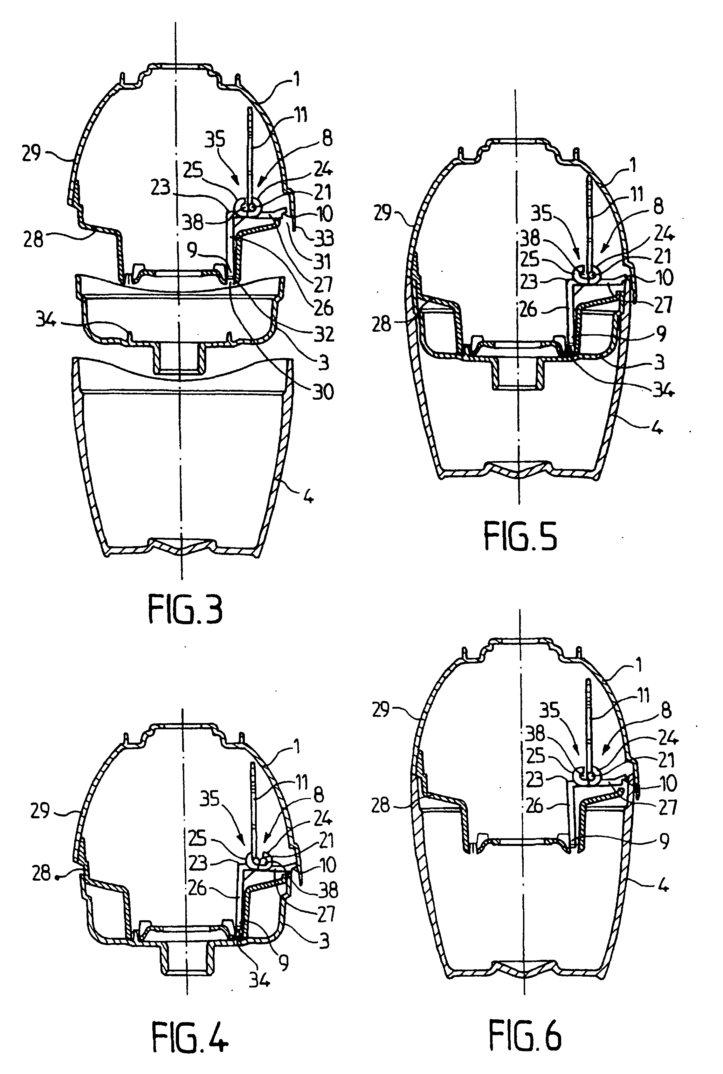

Tel que mieux visible à la figure 3, le premier organe de commande 9 est issu d'un bras descendant 26 de la bascule 23 et le deuxième organe de commande est issu d'un bras latéral 27 de la bascule 23. Le boîtier 1 comporte une base 28 surmontée d'un couvercle 29. Les bras descendant 26 et latéral 27 sont disposés respectivement en regard d'ouvertures 30 et 31 du boîtier 1, ménagées respectivement dans la base 30, et entre la base 28 et le couvercle 29. Les ouvertures 30, 31 sont protégées par des nervures 32, 33 pour éviter l'actionnement volontaire des organes 9, 10.

Le fonctionnement va être expliqué en références aux figures 3 à 6, dans lesquelles le moteur, l'interrupteur et l'outil ne sont pas représentés, par souci de simplicité.

Lorsque le boîtier 1 n'est pas assemblé avec la pièce d'obturation 3, tel que montré à la figure 3, l'axe 21 est logé dans les crochets antérieurs 24 et la tige 11 est en position abaissée. L'interrupteur est ouvert.

Lors de la mise en place de la pièce d'obturation 3 sous le boîtier 1, un ergot 34 ménagé sur la face supérieure de la pièce 3 vient s'insérer dans l'ouverture 30 et repousse l'organe 9 vers l'intérieur du boîtier 1, tel que montré à la figure 4. La résistance du ressort 19 (non montré à la figure 4) provoque un déplacement de la bascule 23 vers la périphérie. La lumière 38 se déplace par rapport à l'axe 21. De ce fait l'axe 21 vient se loger dans les crochets postérieurs 25. L'organe 10 se rapproche de la face interne du boîtier 1. La tige 11 reste en position abaissée. L'interrupteur reste ouvert.

Lors de la mise en place ultérieure du récipient 4, le bord supérieur du récipient 4 repousse l'organe 10 vers le sommet du boîtier 1 et l'axe 21 revient se loger dans les crochets antérieurs 24, tel que montré à la figure 5. Du fait que l'organe 9 est déjà en appui sur la pièce 3 et que le récipient 4 repousse la pièce 3, une pression sur le boîtier 1 provoque la remontée de la tige 11. La came 18 de la tige 11 libère le bras 14 du ressort 15 qui vient en contact avec la borne 16, fermant ainsi l'interrupteur 13 (visibles à la figure 2). L'appareil peut alors fonctionner.

Par contre, lors de l'assemblage du récipient 4 avec le boîtier 1 sans la pièce d'obturation 3, tel que montré à la figure 6, le bord du récipient 4 ne peut repousser l'organe 10. L'axe 21 reste logé dans les crochets antérieurs 24. La tige 11 reste en position abaissée. L'interrupteur reste ouvert.

Grâce à la détection de la présence du récipient 4 et de la pièce d'obturation 3, l'appareil selon l'invention est d'une utilisation particulièrement sûre. Grâce à l'absence de pièces de commande mobiles et/ou déformables dans le récipient 4 et dans la pièce d'obturation 3, l'appareil selon l'invention est d'une utilisation particulièrement agréable, car les pièces en contact avec les aliments peuvent être lavées sans difficultés particulières. De plus l'appareil conserve une construction compacte.

A titre de variante, un autre type d'interrupteur pourrait être utilisé. Notamment, l'appareil pourrait être actionné par la pression d'un bouton de commande agencé sur le boîtier, au lieu d'une pression directe sur le boîtier. Il est également possible d'envisagé un micro-rupteur, ou microswitch, dont la partie mobile est actionnée par la tige, respectivement le boîtier, l'enveloppe extérieure du micro-rupteur étant montée dans le boîtier, respectivement sur la tige monté dans le boîtier.

A titre de variante, d'autres moyens de commande qu'une bascule articulée sur une tige de commande peuvent être envisagés.

De nombreuses améliorations peuvent être apportées à cet appareil dans le cadre des revendications.

## Revendications

1. Appareil électroménager de préparation culinaire comprenant un récipient de travail (4), une pièce d'obturation (3) amovible du récipient de travail, un boîtier (1), disposé au dessus du récipient de travail, logeant un moteur (2) prévu pour entraîner en rotation un outil (5) disposé dans le récipient de travail, le moteur étant associé à des moyens de commande (8) comportant un interrupteur (13) et un premier organe de détection (9) logés dans le boîtier ainsi qu'un deuxième organe de détection (10), l'interrupteur (13) comportant une première partie (14) mobile par rapport à une deuxième partie (16), le premier organe de détection (9) étant prévu pour coopérer avec l'une (14) des parties de l'interrupteur (13) par l'intermédiaire d'une tige de commande (11) ainsi qu'avec la pièce d'obturation (3), le deuxième organe de détection (10) étant prévu pour coopérer avec le récipient de travail (4), **caractérisé en ce que** le deuxième organe de détection (10) est logé dans le boîtier (1) et coopère avec ladite (14) des parties de l'interrupteur (13) par l'intermédiaire de ladite tige de commande (11).

2. Appareil selon la revendication 1, **caractérisé en ce que** le premier organe de détection (9) et le deuxième organe de détection (10) sont issus d'une bascule (23).

3. Appareil selon la revendication 2, **caractérisé en ce que** la bascule (23) présente une articulation (35) par rapport à la tige de commande (11).

4. Appareil selon la revendication 3, **caractérisé en ce que** la bascule (23) comporte de part et d'autre de l'articulation (35) un premier bras (26) portant le premier organe de détection (9) et un deuxième bras (27) portant le deuxième organe de détection (10).

5. Appareil selon la revendication 4, **caractérisé en ce que** le premier bras (26) s'étend axialement vers une partie inférieure du boîtier (1).

6. Appareil selon l'une des revendications 4 ou 5, **caractérisé en ce que** le deuxième bras (27) s'étend radialement vers l'extérieur du boîtier (1).

7. Appareil selon l'une des revendications 3 à 6, **caractérisé en ce que** l'articulation (35) pivote selon une direction perpendiculaire à la direction axiale et à la direction radiale.

8. Appareil selon l'une des revendications 3 à 7, **caractérisé en ce que** l'articulation (35) comporte un axe (21) monté dans une lumière (38).

9. Appareil selon la revendication 8, **caractérisé en ce que** la lumière (38) est formée par au moins une paire de crochets (24, 25) ayant des extrémités libres (36, 37) ménageant l'une par rapport à l'autre une distance légèrement inférieure au diamètre de l'axe (21).

10. Appareil selon l'une des revendications 1 à 9, **caractérisé en ce que** la tige de commande (11) est mobile entre une position basse, dans laquelle l'interrupteur (13) est ouvert, et une position haute, dans laquelle l'interrupteur (13) est fermé.

11. Appareil selon la revendication 10, **caractérisé en ce que** la tige de commande (11) commandant l'interrupteur (13) est mobile verticalement.

12. Appareil selon l'une des revendications 10 ou 11, **caractérisé en ce que** la tige de commande (11) est mobile contre un moyen de rappel (19).

13. Appareil selon la revendication 12, **caractérisé en ce que** la position basse de la tige de commande (11) correspond à la position de rappel du moyen de rappel (19).

14. Appareil selon l'une des revendications 1 à 13, **caractérisé en ce que** le récipient de travail (4) comporte une partie supérieure, coopérant avec la pièce d'obturation (3) et le boîtier (1), réalisée dans une matière présentant des tolérances géométriques supérieures à 0,5 mm.

15. Appareil selon l'une des revendications 1 à 14, **caractérisé en ce que** le récipient de travail est réalisé en verre ou en vitrocéramique.

## Patentansprüche

1. Elektrohaushaltsgerät zum Zubereiten von Nahrungsmitteln, aufweisend einen Arbeitsbehälter (4), ein abnehmbares Teil (3) zum Verschließen des Arbeitsbehälters, ein Gehäuse (1), das über dem Arbeitsbehälter angebracht ist und einen Motor (2) aufnimmt, der dazu vorgesehen ist, ein in dem Arbeitsbehälter angebrachtes Werkzeug (5) drehend anzutreiben, wobei dem Motor Steuermittel (8) zugeordnet sind, die einen Schalter (13) und ein erstes Erfassungsorgan (9), die in dem Gehäuse aufgenommen sind, sowie ein zweites Erfassungsorgan (10) aufweisen, wobei der Schalter (13) einen ersten Abschnitt (14) aufweist, der in Bezug auf einen zweiten Abschnitt (16) beweglich ist, wobei das erste Erfassungsorgan (9) dazu vorgesehen ist, mit dem einem (14) der Abschnitte des Schalters (13) mittels einer Steuerstange (11) und mit dem Verschlussteil (3) zusammenzuwirken, wobei das zweite Erfassungsorgan (10) dazu vorgesehen ist, mit dem Arbeitsbehälter (4) zusammenzuwirken, **dadurch gekennzeichnet, dass** das zweite Erfassungsorgan (10) in dem Gehäuse (1) aufgenommen ist und mittels der Steuerstange (11) mit dem einen (14) der Abschnitte des Schalters (13) zusammenwirkt.

2. Gerät nach Anspruch 1, **dadurch gekennzeichnet, dass** das erste Erfassungsorgan (9) und das zweite Erfassungsorgan (10) aus einer Wippe (23) hervorgehen.

3. Gerät nach Anspruch 2, **dadurch gekennzeichnet, dass** die Wippe (23) in Bezug auf die Steuerstange (11) ein Gelenk (35) aufweist.

4. Gerät nach Anspruch 3, **dadurch gekennzeichnet, dass** die Wippe (23) auf der einen und der anderen Seite des Gelenks (35) einen ersten Arm (26), der das erste Erfassungsorgan (9) trägt, und einen zweiten Arm (27) aufweist, der das zweite Erfassungsorgan (10) trägt.

5. Gerät nach Anspruch 4, **dadurch gekennzeichnet, dass** sich der erste Arm (26) axial hin zu einem unteren Abschnitt des Gehäuses (1) erstreckt.

6. Gerät nach einem der Ansprüche 4 und 5, **dadurch gekennzeichnet, dass** sich der zweite Arm (27) radial zum Äußeren des Gehäuses (1) erstreckt.

7. Gerät nach einem der Ansprüche 3 bis 6, **dadurch gekennzeichnet, dass** das Gelenk (35) gemäß einer Richtung schwenkt, die senkrecht zur Axialrichtung und Radialrichtung ist.

8. Gerät nach einem der Ansprüche 3 bis 7, **dadurch gekennzeichnet, dass** das Gelenk (35) eine Achse (21) aufweist, die in einem Loch (38) angebracht ist.

9. Gerät nach Anspruch 8, **dadurch gekennzeichnet, dass** das Loch (38) durch mindestens zwei Haken (24, 25) gebildet ist, die freie Enden (36, 37) besitzen, welche zwischen sich einen Abstand ausbilden, der ein wenig kleiner ist als der Durchmesser der Achse (21).

10. Gerät nach einem der Ansprüche 1 bis 9, **dadurch gekennzeichnet, dass** die Steuerstange (11) zwischen einer unteren Position, in welcher der Schalter (13) geöffnet ist, und einer oberen Position beweglich ist, in welcher der Schalter (13) geschlossen ist.

11. Gerät nach Anspruch 10, **dadurch gekennzeichnet, dass** die Steuerstange (11), die den Schalter (13) steuert, vertikal beweglich ist.

12. Gerät nach einem der Ansprüche 10 und 11, **dadurch gekennzeichnet, dass** die Steuerstange (11) gegen ein Rückstellmittel (19) beweglich ist.

13. Gerät nach Anspruch 12, **dadurch gekennzeichnet, dass** die untere Position der Steuerstange (11) der Rückstellposition des Rückstellmittels (19) entspricht.

14. Gerät nach einem der Ansprüche 1 bis 13, **dadurch gekennzeichnet, dass** der Arbeitsbehälter (4) einen oberen Abschnitt aufweist, der mit dem Verschlussteil (3) und dem Gehäuse (1) zusammenwirkt und aus einem Material hergestellt ist, das geometrische Toleranzen aufweist, die über 0,5 mm liegen.

15. Gerät nach einem der Ansprüche 1 bis 14, **dadurch gekennzeichnet, dass** der Arbeitsbehälter aus Glas oder Glaskeramik hergestellt ist.

## Claims

1. A household electrical appliance for preparing food, the appliance comprising a working receptacle (4), a removable closure part (3) for the working receptacle, a housing (1) placed above the working receptacle and housing a motor (2) for rotating a tool (5) disposed inside the working receptacle, the motor being associated with control means (8) comprising a switch (13) and a first detector member (9) housed in the housing, together with a second detector member (10), the switch (13) comprising a first portion (14) that is movable relative to a second portion (16), the first detector member (9) being designed to co-operate with one of the portions (14) of the switch (13) via a control rod (11) and with the closure part (3), the second detector member (10) being designed to co-operate with the working receptacle (4), the appliance being **characterized in that** the second detector member (10) is housed in the housing (1) and co-operates with said one (14) of the portions of the switch (13) via said control rod (11).

2. An appliance according to claim 1, **characterized in that** the first detector member (9) and the second detector member (10) extend from a rocker (23).

3. An appliance according to claim 2, **characterized in that** the rocker (23) presents a hinge (35) relative to the control rod (11).

4. An appliance according to claim 3, **characterized in that**, on either side of the hinge (35), the rocker (23) comprises a first arm (26) carrying the first detector member (9), and a second arm (27) carrying the second detector member (10).

5. An appliance according to claim 4, **characterized in that** the first arm (26) extends axially towards the bottom portion of the housing (1).

6. An appliance according to claim 4 or claim 5, **characterized in that** the second arm (27) extends radially towards the outside of the housing (1).

7. An appliance according to any one of claims 3 to 6, **characterized in that** the hinge (35) pivots about a direction perpendicular to the axial direction and to the radial direction.

8. An appliance according to any one of claims 3 to 7, **characterized in that** the hinge (35) comprises a shaft (21) mounted in a slot (38).

9. An appliance according to claim 8, **characterized in that** the slot (38) is formed by at least one pair of hooks (24, 25) having free ends (36, 37) leaving between them a distance that is slightly smaller than the diameter of the shaft (21).

10. An appliance according to any one of claims 1 to 9, **characterized in that** the control rod (11) is movable between a low position in which the switch (13) is open, and a high position in which the switch (13) is closed.

11. An appliance according to claim 10, **characterized in that** control rod (11) controlling the switch (13) is movable vertically.

12. An appliance according to claim 10 or claim 11, **characterized in that** the control rod (11) is movable against return means (19).

13. An appliance according to claim 12, **characterized in that** the low position of the control rod (11) corresponds to the return position of the return means (19).

14. An appliance according to any one of claims 1 to 13, **characterized in that** the working receptacle (4) has a top portion and co-operates with the closure part (3) and with the housing (1), and that is made of a material presenting dimensional tolerances greater than 0.5 mm.

15. An appliance according to any one of claims 1 to 14, **characterized in that** the working receptacle is made of glass or glass ceramic.
